(19) Europäisches Patentamt / European Patent Office / Office européen des brevets

(11) **EP 4 310 113 A1**

(12) **EUROPEAN PATENT APPLICATION**
published in accordance with Art. 153(4) EPC

(43) Date of publication:
**24.01.2024 Bulletin 2024/04**

(21) Application number: **22771569.5**

(22) Date of filing: **18.03.2022**

(51) International Patent Classification (IPC):
**C08F 212/06** (2006.01)    **C08F 212/08** (2006.01)
**C08F 220/14** (2006.01)

(52) Cooperative Patent Classification (CPC):
**C08F 212/06; C08F 212/08; C08F 220/14**

(86) International application number:
**PCT/JP2022/012888**

(87) International publication number:
**WO 2022/196827 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2021 JP 2021045598**

(71) Applicant: **Kuraray Co., Ltd.**
**Kurashiki-shi, Okayama 710-0801 (JP)**

(72) Inventors:
- **SAKAMOTO, Shigeru**
  **Tainai-shi, Niigata 959-2691 (JP)**
- **NOMOTO, Yusaku**
  **Tainai-shi, Niigata 959-2691 (JP)**
- **MATSUMURA, Atsushi**
  **Tainai-shi, Niigata 959-2691 (JP)**
- **WATANABE, Kenji**
  **Tainai-shi, Niigata 959-2691 (JP)**

(74) Representative: **Müller-Boré & Partner**
**Patentanwälte PartG mbB**
**Friedenheimer Brücke 21**
**80639 München (DE)**

(54) **METHACRYLIC COPOLYMER AND METHOD FOR PRODUCING SAME**

(57)   The present invention provides a copolymer essentially containing a methyl methacrylate unit, an $\alpha$-methylstyrene unit, and a styrene unit, and provides a copolymer production method suitable for use in producing the copolymer. A methacrylic copolymer comprising 40 to 87 mass% of a methyl methacrylate unit, 8 to 30 mass% of an $\alpha$-methylstyrene unit, and 5 to 30 mass% of a styrene unit, wherein when heated at a temperature increase rate of 10°C/min in a nitrogen atmosphere, the methacrylic copolymer has a 1% thermogravimetric loss temperature of higher than 270°C, and the methacrylic copolymer satisfies a relationship represented by formula (1):

$$(|A-B|)/B < 0.05 \qquad (1)$$

wherein A is a logarithm of peak top molecular weight in a differential molecular mass distribution curve obtained by gel permeation chromatography measurement using a refractive index detector, and B is a logarithm of peak top molecular weight in a differential molecular weight distribution curve obtained by gel permeation chromatography measurement using an absorbance detector at a detection wavelength of 254 nm.

EP 4 310 113 A1

**Description**

Technical Field

Cross-Reference to Related Applications

This application claims priority from Japanese Patent Application No. 2021-045598, filed on March 19, 2021, the disclosure of which is incorporated herein by reference in its entirety. The present invention relates to a methacrylic copolymer containing a methyl methacrylate unit, an $\alpha$-methylstyrene unit, and a styrene unit, and also relates to a method for producing the methacrylic copolymer.

Background Art

A methacrylic copolymer containing essentially a methyl methacrylate unit and an $\alpha$-methylstyrene unit is known as a resin material excellent in transparency.

For example, PTL 1 discloses a resin material for optical prisms or lenses, which is composed of a copolymer containing 10 to 65 wt% of an $\alpha$-methylstyrene unit, 10 to 40 wt% of a methyl methacrylate unit, and 10 to 80 wt% of a styrene unit, with a weight average molecular weight of 50000 to 400000, a Vicat softening point of 105°C or higher, a refractive index of 1.550 to 1.580, a water absorption rate of 0.13% or less, and a birefringence value of 300 nm or less in the form of a prism with a thickness of 10 mm.

PTL 2 discloses a resin molded article obtained by coating the surface of a transparent thermoplastic with an $\alpha$-methylstyrene copolymer that has a weight average molecular weight of 50000 to 200000, and that contains 10 to 40 wt% of an $\alpha$-methylstyrene unit, 40 to 90 wt% of a methyl methacrylate unit, and 0 to 30 wt% of a monomer unit copolymerizable with these units.

PTL 3 discloses a method for producing an $\alpha$-methylstyrene copolymer by using $\alpha$-methylstyrene, methyl methacrylate, and maleic anhydride as monomers, the method characterized by adding a polyfunctional organic peroxide having a 10-hour half-life temperature of 60 to 110°C as a polymerization initiator in an amount of 0.05 to 1.0 wt% based on the total amount of monomers, and performing bulk polymerization at 100 to 150°C.

PTL 4 discloses a method for producing an $\alpha$-methylstyrene copolymer containing 6 to 34 wt% of an $\alpha$-methylstyrene unit, 0 to 50 wt% of a styrene unit, and 94 to 16 wt% of a methyl methacrylate unit, by adding 0.05 to 1.0 parts by weight of a polyfunctional organic peroxide having a 10-hour half-life temperature of 60 to 110°C as a polymerization initiator to 100 parts by weight of a monomer containing 6 to 40 wt% of $\alpha$-methylstyrene, 0 to 50 wt% of styrene, and 94 to 16 wt% of methyl methacrylate, and performing bulk polymerization at 100 to 150°C.

PTL 5 discloses a method for producing an $\alpha$-methylstyrene copolymer containing 10 to 35 wt% of an $\alpha$-methylstyrene unit, 94 to 15 wt% of a methyl methacrylate unit, and 0 to 50 wt% of a vinyl monomer copolymerizable with these monomers as constituent units, by adding 0.05 to 1.0 parts by weight of an organic peroxide as a polymerization initiator and 0.01 to 0.15 parts by weight of divinylbenzene per 100 parts by weight of the monomers, and polymerizing the monomers at 100 to 150°C. PTL 6 states that this production method enables continuous production of an $\alpha$-methylstyrene copolymer by bulk polymerization.

Citation List

Patent Literature

    PTL 1: WO2005/070978A
    PTL 2: JPH05/59321A
    PTL 3: JPH04-300907A
    PTL 4: JPH04-218515A
    PTL 5: JPH04-328111A

Summary of Invention

Technical Problem

An object of the present invention is to provide a novel copolymer essentially comprising a methyl methacrylate unit and an $\alpha$-methylstyrene unit, and a copolymer production method suitable for use in producing the copolymer.

Solution to Problem

The present invention includes the following.
[1] A methacrylic copolymer comprising 40 to 87 mass% of a methyl methacrylate unit, 8 to 30 mass% of an α-methylstyrene unit, and 5 to 30 mass% of a styrene unit, wherein

when heated at a temperature increase rate of 10°C/min in a nitrogen atmosphere, the methacrylic copolymer has a 1% thermogravimetric loss temperature of higher than 260°C, and
the methacrylic copolymer satisfies a relationship represented by formula (1):

$$( | A - B | ) / B < 0 . 0 5 \qquad (1)$$

wherein A is a logarithm of peak top molecular weight in a differential molecular mass distribution curve obtained by gel permeation chromatography measurement using a refractive index detector, and B is a logarithm of peak top molecular weight in a differential molecular weight distribution curve obtained by gel permeation chromatography measurement using an absorbance detector at a detection wavelength of 254 nm.

[2] The methacrylic copolymer according to [1] having a glass transition temperature of 115°C or higher.
[3] The methacrylic copolymer according to [1] having a glass transition temperature of 120°C or higher.
[4] The methacrylic copolymer according to [1] having a saturated water absorption rate of less than 1.7%.
[5] A resin composition comprising the methacrylic copolymer of [1] .
[6] A resin composition comprising a methacrylic resin and the methacrylic copolymer of [1], the methacrylic resin comprising 90 mass% or more of a methyl methacrylate unit.
[7] The resin composition according to [6], which has a haze of 3.0% or less as measured by a method specified in JIS K 7136.
[8] A resin composition comprising an antioxidant and the methacrylic copolymer of [1].
[9] A molded article comprising the methacrylic copolymer of [1] or the resin composition of [5] or [6].
[10] A film comprising the methacrylic copolymer of [1] or the resin composition of [5].
[11] A laminate comprising a layer comprising the methacrylic copolymer of [1] and a layer comprising another thermoplastic resin.
[12] A method for producing the methacrylic copolymer of [1], comprising

continuously supplying a reactant to a tank reactor, the reactant comprising a monomer mixture and a radical polymerization initiator, the monomer mixture containing 40 to 87 mass% of methyl methacrylate, 10 to 30 mass% of α-methylstyrene, and 3 to 30 mass% of styrene;
subjecting the monomer mixture to bulk polymerization in the tank reactor until a polymerization conversion rate of 30 to 60 mass% is achieved to obtain a reaction product;
continuously extracting the reaction product from the tank reactor; and
removing the monomer mixture remaining in the extracted reaction product from the reaction product,
wherein the incorporation rate of an α-methylstyrene unit into the methacrylic copolymer is more than 50% relative to the weight fraction of the α-methylstyrene in the reactant monomer.

[13] A method for producing the methacrylic copolymer of [1] comprising

continuously supplying a reactant to a tank reactor, the reactant comprising a monomer mixture and a radical polymerization initiator, the monomer mixture containing 40 to 87 mass% of methyl methacrylate, 10 to 30 mass% of α-methylstyrene, and 3 to 30 mass% of styrene;
subjecting the monomer mixture to bulk polymerization in the tank reactor until a polymerization conversion rate of 30 to 60 mass% is achieved to obtain a reaction product;
continuously extracting the reaction product from the tank reactor; and
removing the monomer mixture remaining in the extracted reaction product from the reaction product,
wherein when the radical polymerization initiator present in liquid in the tank reactor has an average concentration of I mol/L and the average residence time of the reactant in the tank reactor is θ hours, the product of the average concentration and the average residence time, $I \times \theta$, is more than $1 \times 10^{-6}$ mol·hr/L and less than $2 \times 10^{-5}$

mol·hr/L.

[14] A method for producing the methacrylic copolymer of [1], comprising continuously supplying a reactant to a tank reactor, the reactant comprising a monomer mixture and a radical polymerization initiator, the monomer mixture containing 40 to 87 mass% of methyl methacrylate, 10 to 30 mass% of $\alpha$-methylstyrene, and 3 to 30 mass% of styrene, per 100 parts by mass of the monomer mixture;

subjecting the monomer mixture to a polymerization reaction in the tank reactor to obtain a reaction product; continuously extracting the reaction product from the tank reactor; and
removing the monomer mixture remaining in the extracted reaction product from the reaction product, wherein when the radical polymerization initiator present in liquid in the tank reactor has an average concentration of I mol/L and the average residence time of the reactant in the liquid in the tank reactor is $\theta$ hours and when the product of the average concentration and the average residence time, $I \times \theta$, is more than $1.0 \times 10^{-6}$ mol·hr/L and less than $2.0 \times 10^{-5}$ mol·hr/L, a polymerization conversion rate of 30 to 60 mass% is achieved.

[15] The production method according to [12], wherein the temperature in the tank reactor is 120°C or higher and 150°C or lower, and the average residence time $\theta$ of the reactant in the tank reactor is 1.5 to 5 hours.

Advantageous Effects of Invention

The methacrylic copolymer of the present invention has high heat resistance, a low saturated water absorption rate, and high thermal decomposition resistance. The molded article of the present invention is suitable as an optical member such as a polarizing-plate protection film.

According to the production method of the present invention, methyl methacrylate, $\alpha$-methylstyrene, and styrene can be continuously bulk polymerized at a high polymerization conversion rate with a short average residence time; therefore, for example, the copolymer described above can be produced with high productivity, high flexibility, or high responsiveness. The production method of the present invention is suitable for production of a methacrylic copolymer.

Description of Embodiments

The singular forms (the terms "a," "an," and "the") used in the present specification shall be construed to include both the singular and the plural, unless otherwise indicated in the specification or clearly contradicted by context.

The methacrylic copolymer of the present invention comprises a structural unit derived from methyl methacrylate (which may be referred to herein as "methyl methacrylate unit"), a structural unit derived from $\alpha$-methylstyrene (which may be referred to herein as "$\alpha$-methylstyrene unit"; and a structural unit derived from styrene (which may be referred to herein as "styrene unit").

The total content of the structural unit derived from methyl methacrylate is usually 40 to 87 mass%, preferably 45 to 87 mass%, and more preferably 50 to 87 mass%.

The total content of the structural unit derived from $\alpha$-methylstyrene is usually 8 to 30 mass%, preferably 8 to 27 mass%, and more preferably 8 to 25 mass%.

The total content of the structural unit derived from styrene is usually 5 to 30 mass%, preferably 5 to 28 mass%, and more preferably 5 to 25 mass%. The methacrylic copolymer of the present invention may contain one or more other copolymerizable monomer units in a small amount of 5 mass% or less. Examples of such another copolymerizable monomer unit include methacrylate units other than methyl methacrylate units; and acrylate units such as methyl acrylate units.

The sum of all monomer units including the methyl methacrylate unit, the $\alpha$-methylstyrene unit, and the styrene unit is 100 mass%.

The methacrylic copolymer of the present invention has a value of less than 0.05, preferably less than 0.04, and more preferably less than 0.03, as calculated from formula: |A-B|/B. This suggests that the methacrylic copolymer of the present invention having any molecular weight contains a structural unit that absorbs light at a wavelength of 254 nm in an approximately equal proportion, and that the degree of growth of the molecular chain has little effect on the composition ratio of the copolymer. In the formula, A is a logarithm of peak top molecular mass in a differential molecular weight distribution curve obtained by gel permeation chromatography measurement using a refractive index detector; and B is a logarithm of peak top molecular weight in a differential molecular weight distribution curve obtained by gel permeation chromatography measurement using an absorbance detector with a detection wave length of 254 nm. |A-B| represents an absolute value of the difference between A and B. The molecular weight of the methacrylic copolymer is obtained by conversion from the elution time of the methacrylic copolymer using a calibration curve representing the relationship between the molecular weight and the elution time (retention time) of standard polymethyl methacrylate.

The peak top molecular weight in the differential molecular weight distribution curve refers to a molecular weight at an inflection point or a maximum slope point in the integral molecular weight distribution curve.

The methacrylic copolymer of the present invention preferably has a weight average molecular weight Mw of 30000 or more and 200000 or less, more preferably 40000 or more and 180000 or less, and still more preferably 50000 or more and 160000 or less. The Mw is calculated from the molecular weight distribution obtained by gel permeation chromatography measurement using a refractive index detector according to formula (2).

$$\mathrm{Mw} = \Sigma \ (M_i{}^2 \times N_i) \ / \ \Sigma \ (M_i \times N_i) \ = \Sigma \ (C_i \times M_i) \ / \ \Sigma \ (C_i) \qquad (2)$$

N represents the number of polymer molecules, M represents the molecular weight, and C represents the concentration. There is a relationship represented by $C = M \times N$.

The smaller the Mw, the more brittle the molded article tends to be. The larger the Mw of the methacrylic polymer, the lower the productivity tends to be.

The number average molecular weight Mn is calculated from a molecular weight distribution obtained by gel permeation chromatography measurement using a refractive index detector according to formula (3).

$$\mathrm{Mn} = \Sigma \ (M_i \times N_i) \ / \ \Sigma \ (N_i) \ = \Sigma \ (C_i) \ / \ \Sigma \ (N_i) \qquad (3)$$

N represents the number of polymer molecules, M represents the molecular weight, and C represents the concentration. There is a relationship represented by $C = M \times N$.

The measurement by gel permeation chromatography is performed in the following manner. Tetrahydrofuran is used as the eluent, and two TSKgel SuperMultipore HZM-M columns and a SuperHZ4000 column (produced by Tosoh Corporation) are connected in series and used. The analysis device used is HLC-8320 (product number, produced by Tosoh Corporation) equipped with a differential refractive index detector (RI detector) and an absorbance detector (detection wavelength: 254 nm). 4 mg of a resin material is dissolved in 5 ml of tetrahydrofuran and further filtered through a 0.2 um filter to prepare a test solution. The temperature of a column oven is set to 40°C, and 20 pl of the test solution is poured into the column at an eluent flow rate of 0.35 ml/min to obtain a chromatogram. The chromatogram includes two types of charts: a chart obtained by plotting the electrical signal value (intensity Y) derived from the refractive index difference between the test solution and the reference solution, relative to the retention time X; and a chart obtained by plotting the electrical signal value (intensity Y) derived from the absorbance at a wavelength of 254 nm, relative to the retention time X. Standard polystyrene is measured by gel permeation chromatography to create a calibration curve showing the relationship between retention time and molecular weight. The base line is obtained by connecting a point at which the slope of the peak on the high-molecular-weight side of the chromatogram changes from zero to positive, and a point at which the slope of the peak on the low-molecular-weight side changes from negative to zero.

The melt flow rate, as determined by measuring the methacrylic resin composition of the present invention at 230°C under a load of 3.8 kg, is preferably 0.5 to 30 g/10 min, more preferably 1.0 to 20 g/10 min, and more preferably 1.5 to 15 g/10 min.

The methacrylic copolymer of the present invention preferably has a glass transition temperature Tg of 115°C or higher, more preferably 120°C or higher, and even more preferably 125°C or higher. The upper limit of the glass transition temperature of the methacrylic copolymer of the present invention is not particularly limited, but is preferably 140°C or lower.

The 1% thermogravimetric loss temperature of the methacrylic copolymer according to the present invention in a nitrogen atmosphere is preferably higher than 260°C, more preferably higher than 265°C, and even more preferably higher than 270°C. The 1% thermogravimetric loss temperature can be determined using a thermogravimetric analyzer (TGA) as a temperature at which 1% thermogravimetric weight is lost, based on the weight fed.

When maintained at 270°C for 30 minutes, the methacrylic copolymer according to the present invention preferably has a thermogravimetric retention rate of more than 88%, and more preferably more than 90%. The thermogravimetric retention rate can be measured using a thermogravimetric analyzer (TGA). A sample having an initial weight of $W_0$ is heated to 270°C at a temperature increase rate of 20°C/min in a nitrogen gas atmosphere and then maintained for 30 minutes after the temperature has reached 270°C. When the weight has reached $W_1$, the thermogravimetric retention rate (%) can be calculated from $(W_1/W_0) \times 100$.

The methacrylic copolymer of the present invention preferably has a saturated water absorption rate of less than 1.7%, and more preferably less than 1.6%.

The saturated water absorption rate is determined as follows. A press-molded sheet of 50 mm × 50 mm × 1.0 mm is placed in a dryer at 80°C and dried for 16 hours or longer. The dried sheet is returned to room temperature and weighed as an initial weight $W_O$ with an accuracy of 0.1 mg. Subsequently, the sheet is immersed in distilled water at 23°C for 24 hours, drained, wiped with a dry cloth or the like to remove moisture, and weighed with an accuracy of 0.1 mg within 1 minute after wiping. The sheet is again immersed in distilled water at 23°C for 24 hours, drained, wiped with a dry cloth or the like to remove moisture, and weighed with an accuracy of 0.1 mg within 1 minute after wiping. This process is repeated. The weight when the weight change becomes smaller than 0.02% of the initial weight $W_O$ is defined as a saturated weight $W_S$. The saturated water absorption rate can be calculated by the following formula.

$$\texttt{Saturated water absorption rate = ((W_S-W_O)/W_O) } \times \texttt{ 100}$$

The methacrylic copolymer of the present invention is not particularly limited by its production method as long as the obtained methacrylic copolymer satisfies the characteristic values described above. The methacrylic copolymer of the present invention can be obtained, for example, by a method for producing the methacrylic copolymer of the present invention.

The method for producing the methacrylic copolymer according to one embodiment of the present invention comprises the steps of continuously supplying a reactant to a tank reactor; polymerizing a monomer mixture of the reactant in the tank reactor to obtain a reaction product; continuously extracting the reaction product from the tank reactor; and removing the monomer mixture remaining in the extracted reaction product from the reaction product.

The method for producing a methacrylic copolymer (production method) according to one embodiment of the present invention comprises the steps of continuously supplying a reactant to a tank reactor, the reactant comprising a monomer mixture and a radical polymerization initiator, the monomer mixture containing 40 to 87 mass% of methyl methacrylate, 10 to 30 mass% of $\alpha$-methylstyrene, and 3 to 30 mass% of styrene; subjecting the monomer mixture to bulk polymerization in the tank reactor until a polymerization conversion rate of 30 to 60 mass% is achieved to obtain a reaction product; continuously extracting the reaction product from the tank reactor; and removing the monomer mixture remaining in the extracted reaction product from the reaction product. In a preferred embodiment, the present invention provides a method for producing a methacrylic copolymer comprising the steps of:

continuously supplying a reactant to a tank reactor, the reactant comprising a monomer mixture and a radical polymerization initiator, the monomer mixture containing 40 to 87 mass% of methyl methacrylate, 10 to 30 mass% of $\alpha$-methylstyrene, and 3 to 30 mass% of styrene;
subjecting the monomer mixture to bulk polymerization in the tank reactor to obtain a reaction product;
continuously extracting the reaction product from the tank reactor; and
removing the monomer mixture remaining in the extracted reaction product from the reaction product,

wherein when the radical polymerization initiator present in the liquid in the tank reactor has an average concentration of I mol/L and the average residence time of the reactant in the liquid of the tank reactor is $\theta$ hours, the product of the average concentration and the average residence time, $I \times \theta$, is more than $1.0 \times 10^{-6}$ mol·hr/L and less than $2.0 \times 10^{-5}$ mol·hr/L. In the present invention, when the product of the average concentration and the average residence time, $I \times \theta$, is more than $1.0 \times 10^{-6}$ mol·hr/L and less than $2.0 \times 10^{-5}$ mol·hr/L, the polymerization conversion rate is preferably 30 to 60 mass%.

The reactant used in the production method of the present invention contains a monomer mixture and a radical polymerization initiator, and preferably contains a monomer mixture, a chain transfer agent, and a radical polymerization initiator.

The monomer mixture comprises methyl methacrylate, $\alpha$-methylstyrene, and styrene.

The amount of methyl methacrylate in the monomer mixture is usually 40 to 87 mass%, preferably 45 to 87 mass%, and more preferably 50 to 87 mass%.

The amount of $\alpha$-methylstyrene in the monomer mixture is usually 10 to 30 mass%, preferably 10 to 27 mass%, and more preferably 10 to 25 mass%.

The amount of styrene in the monomer mixture is usually 3 to 30 mass%, preferably 3 to 28 mass%, and more preferably 3 to 25 mass%.

The sum of all monomers in the monomer mixture, including methyl methacrylate, $\alpha$-methylstyrene, and styrene, is 100 mass%.

When the monomer mixture contains styrene of the above proportion, the polymerization rate of $\alpha$-methylstyrene having low copolymerization reactivity with methyl methacrylate tends to easily increase, and an increased polymerization conversion rate can tend to be easily achieved in a continuous polymerization system by using an appropriate amount of an initiator with a short average residence time.

The monomer mixture preferably has a b* value of -1 to 2, and more preferably -0.5 to 1.5. The b* value within this range is advantageous because the resulting $\alpha$-methylstyrene-methyl methacrylate copolymer forms a molded article having little coloration with high productivity. The b* value is a value measured in accordance with the International Commission on Illumination (CIE) standard (1976) or JIS Z 8722.

The monomer mixture removed from the reaction product in the step of removing the monomer mixture in the reaction product extracted from the tank reactor can be recovered and used again in the present invention. If the b* value of the recovered monomer mixture becomes high due to heat added at the time of, for example, recovery, it is preferable to purify the monomer mixture by an appropriate method to bring the b* value to the above-mentioned range.

In order to, for example, adjust the molecular weight of the copolymer, a chain transfer agent can be incorporated into the reactant. Examples of chain transfer agents that can be used in the present invention include alkyl mercaptans such as n-octyl mercaptan, n-dodecyl mercaptan, t-dodecyl mercaptan, 1,4-butanedithiol, 1,6-hexanedithiol, ethylene glycol bisthiopropionate, butanediol bisthioglycolate, butanediol bisthiopropionate, hexanediol bisthioglycolate, hexanediol bisthiopropionate, trimethylolpropane tris-($\beta$-thiopropionate), and pentaerythritol tetrakisthiopropionate; $\alpha$-methylstyrene dimers; and terpinolene. Among these, monofunctional alkyl mercaptans such as n-octyl mercaptan and n-dodecyl mercaptan are preferable. These chain transfer agents can be used alone or in a combination of two or more. The amount of the chain transfer agent used is preferably 0 to 1 part by mass, more preferably 0.0001 to 0.8 parts by mass, even more preferably 0.001 to 0.6 parts by mass, and still more preferably 0.002 to 0.4 parts by mass, based on 100 parts by mass of the monomer mixture.

The radical polymerization initiator used in the present invention generates a reactive radical. Preferred examples of the radical polymerization initiator include t-hexylperoxyisopropyl monocarbonate, t-hexylperoxy-2-ethylhexanoate, 1,1,3,3-tetramethylbutylperoxy-2-ethylhexanoate, t-butyl peroxypivalate, t-hexyl peroxypivalate, t-butyl peroxyneodecanoate, t-hexyl peroxyneodecanoate, 1,1,3,3-tetramethylbutyl peroxyneodecanoate, 1,1-bis(t-hexylperoxy)cyclohexane, benzoyl peroxide, 3,5,5-trimethylhexanoyl peroxide, lauroyl peroxide, 2,2'-azobis(2-methylpropionitrile), 2,2'-azobis(2-methylbutyronitrile), and dimethyl 2,2'-azobis(2-methylpropionate); and more preferably t-hexylperoxy-2-ethylhexanoate, 1,1-bis(t-hexylperoxy)cyclohexane, 1,1-bis(t-hexylperoxy)cyclohexane, and dimethyl 2,2'-azobis(2-methylpropionate). These radical polymerization initiators can be used alone or in a combination of two or more. The amount of the radical polymerization initiator used is preferably set so as to satisfy the average concentration of the radical polymerization initiator present in the liquid in the tank reactor, which will be described below.

The method for preparing the reactant is not particularly limited. The reactant is preferably prepared immediately before being supplied to the tank reactor. The reactant is preferably prepared in an inert atmosphere, such as nitrogen gas. For example, it is preferable that each component constituting the reactant is continuously supplied from a tank storing each component through a pipe to a mixer, and the components are mixed in the mixer to obtain a reactant. The radical polymerization initiator can be prepared in the form of a solution obtained by dissolving the radical polymerization initiator in methyl methacrylate. The mixer can be equipped with a dynamic stirrer or a static stirrer. The obtained reactant is continuously supplied to the tank reactor.

The monomer mixture can be prepared before mixing with the chain transfer agent and/or the radical polymerization initiator. Preferably, the radical polymerization initiator is dissolved in methyl methacrylate to form a polymerization initiator solution, which is then mixed with either the monomers or a mixed liquid of the monomers and a chain transfer agent so that the resulting mixture contains the polymerization initiator solution at a predetermined ratio. The polymerization initiator solution may have a dissolved oxygen content of preferably more than 3 ppm, more preferably more than 5 ppm, and even more preferably more than 10 ppm. The monomer mixture or reactant may be prepared in the presence of oxygen. The monomer mixture or reactant immediately after preparation may have a dissolved oxygen content of preferably more than 3 ppm, more preferably more than 5 ppm, and even more preferably more than 10 ppm.

The reactant immediately before being supplied to the tank reactor preferably contains dissolved oxygen in a concentration of 10 ppm or less, more preferably 5 ppm or less, still more preferably 4 ppm or less, and most preferably 3 ppm or less. When the dissolved oxygen content is within such a range, the polymerization reaction proceeds smoothly, and a molded article free from silver streaks and coloration tends to be easily obtained. The amount of dissolved oxygen in the reactant immediately before being supplied can be adjusted by purging the reactant immediately after preparation with nitrogen to expel oxygen.

The tank reactor used in the present invention is capable of simultaneously supplying the reactant, polymerizing the monomer mixture, and extracting the reaction product. The tank reactor is usually equipped with an agitating means for stirring the liquid in the tank reactor, a supply port for supplying the reactant to the tank reactor, and an extraction port for extracting the reaction product from the tank reactor. The amount of the reactant supplied to the tank reactor and the amount of the reaction product extracted from the tank reactor are adjusted so that the amount of liquid in the tank reactor is almost constant. The volume of the liquid in the tank reactor (volume V) is preferably 1/4 or more, more preferably 1/4 to 3/4, and even more preferably 1/3 to 2/3 of the volume of the tank reactor.

The tank reactor used in the present invention preferably comprises multiple supply ports for supplying the reactant. The reactant is continuously supplied from at least two supply ports, either simultaneously or alternately, and preferably simultaneously. The supply ports may be disposed on the top surface, lateral surface, or bottom surface of the tank reactor, or on at least two of the top, lateral, and bottom surfaces. The multiple supply ports are preferably disposed at mutually symmetric positions. With respect to the height, the supply port may be provided at a position higher than the liquid level in the tank reactor or may be provided at a position lower than the liquid level in the tank reactor. The shape of the supply port may be the same as that of the cut end of a circular tube itself, or the supply port may be configured so that the reactant is widely spread over the liquid surface in the tank reactor. When at least two supply ports are provided, the radical formation reaction proceeds more efficiently, so that the amount of radical polymerization initiator required to achieve the desired polymerization conversion rate can be reduced.

Examples of the stirring means include Maxblend stirrers, lattice blade stirrers, propeller stirrers, screw stirrers, helical ribbon stirrers, and paddle stirrers. Among these stirrers, Maxblend stirrers are preferred in terms of homogeneous mixing.

The temperature inside the tank reactor, that is, the temperature of the liquid contained in the tank reactor is preferably 120 to 150°C, and more preferably 124 to 145°C. The liquid temperature can be controlled, for example, by an external heat exchange method using a jacket, a heat exchanger tube, or the like, or by a self-heat exchange method in which at least one tube through which the reactant or the reaction product flows is provided within the tank reactor.

The average residence time of the reactant in the tank reactor is preferably 1.5 to 5 hours, more preferably 2 to 4.5 hours, and still more preferably 2.5 to 4 hours. The average residence time of the reactant in the tank reactor is preferably in the range described above from the viewpoint of facilitating the control of the polymerization reaction and the control of the molecular weight while the amount of the polymerization initiator required is reduced, and improving the productivity by bringing the reaction to a steady state in a relatively short time. The average residence time can be adjusted by the capacity of the tank reactor and the amount of the reactant supplied. The radical polymerization initiator present in the liquid in the tank reactor preferably has an average concentration of $1.0 \times 10^{-6}$ mol/L or more and $2.0 \times 10^{-5}$ mol/L or less.

In the bulk polymerization, no organic solvent is used in principle. However, for example, when the viscosity of the liquid in the tank reactor is to be adjusted, the reactant can optionally contain an organic solvent. Preferable examples of the organic solvent include aromatic hydrocarbons such as benzene, toluene, and ethylbenzene. These solvents can be used alone or in a combination of two or more. The amount of the organic solvent, if used, is preferably 30 parts by mass or less, more preferably 10 parts by mass or less, and still more preferably 0 parts by mass, per 100 parts by mass of the monomer mixture.

In the production method of the present invention, the water content of the liquid in the tank reactor is preferably 1000 ppm or less, more preferably 700 ppm or less, and still more preferably 280 ppm or less. Reducing the water content can inhibit the production of resin foreign matter with a size of several um to several tens of um during the polymerization reaction. Thus, when the composition containing the obtained copolymer is formed into a film or a sheet by melt molding, the occurrence of defects with an outer diameter of several tens of um comprising the foreign matter as the core can be significantly reduced.

The method for reducing the water content of the liquid in the tank reactor include, for example, a method comprising pretreating the reactant using an adsorption/dehydration column or the like; and a method comprising introducing an inert gas into the gas phase portion in the tank reactor, entraining part of the water vapor with the inert gas, condensing the resulting gas using a condenser of a brine cooler, and extracting the condensate from the system.

The bulk polymerization in the tank reactor is performed until a polymerization conversion rate of 30 to 60 mass%, preferably 35 to 55 mass%, more preferably 35 to 50 mass%, and even more preferably 35 to 45 mass%, is achieved. The polymerization conversion rate is a value that can be calculated from the content of the copolymer or monomer mixture present in the reaction product extracted from the tank reactor relative to the reactant. The bulk polymerization in the tank reactor is preferably performed in an atmosphere of an inert gas, such as nitrogen gas.

An additional reactor may be connected downstream of the tank reactor. The additional reactor that can be connected downstream may be a tank reactor or a tube reactor. In the additional reactor, bulk polymerization is further allowed to proceed. The bulk polymerization in the additional reactor may be carried out until a polymerization conversion rate of 30 to 60 mass%, preferably 35 to 55 mass%, more preferably 35 to 50 mass%, and even more preferably 35 to 45 mass%, is achieved. The polymerization conversion rate can be calculated as a value from the content of the copolymer or monomer mixture present in the reaction product extracted from the additional reactor relative to the reactant. Bulk polymerization in the additional reactor is preferably carried out in an atmosphere of inert gas, such as nitrogen gas.

According to the production method of the present invention, the incorporation rate of α-methylstyrene calculated from the following formula can be more than 50%, preferably more than 52%, and more preferably more than 54%.

$$\text{α-Methylstyrene incorporation rate (\%) = (Weight of α-methylstyrene in the methacrylic}$$

$$\text{copolymer/Weight of α-methylstyrenestyrene in the monomer mixture)} \times 100$$

The production method of the present invention comprises the step of removing the monomer mixture from the reaction product. In this step, optionally, the solvent is also simultaneously removed. The copolymer is isolated in this step. The removal method is not particularly limited and is preferably a heat devolatilization method. Examples of the heat devolatilization method include the equilibrium flash evaporation method and the adiabatic flash evaporation method. The adiabatic flash evaporation method is preferred. The temperature at which the adiabatic flash evaporation method is carried out is preferably 180 to 300°C, more preferably 190 to 280°C, and even more preferably 200 to 280°C. If the adiabatic flash evaporation method is carried out at an excessively low temperature, devolatilization will take a long time, which may result in insufficient removal of volatile matter and cause defects in the appearance of the obtained molded article, such as silver streaks. On the other hand, if the adiabatic flash evaporation method is carried out at an excessively high temperature, coloration of the copolymer due to, for example, oxidation, burning, or decomposition, tends to occur or and a depolymerization reaction of the copolymer tends to occur. The adiabatic flash evaporation method may be performed in multiple stages. In this case, the vapor of the flash evaporated monomer mixture can be used to heat the reaction product flowing through the heat transfer tube, and the heated reaction product can be supplied into the flash tank at low pressure and subjected to flash evaporation. The reaction product can be pressurized, for example, by a pump or other means.

The copolymer obtained by removing the monomer mixture from the reaction product can be formed into pellets, powder, or the like according to a known method in order to facilitate handling as a molding material. The amount of the monomer mixture contained in the copolymer after removing the monomer mixture is preferably 1 mass% or less, and more preferably 0.5 mass% or less. A vented extruder is preferably used to remove the monomer mixture, form the isolated copolymer into a molding material, and/or incorporate additives that will be described below.

The methacrylic copolymer of the present invention or the copolymer obtained by the production method of the present invention can be subjected to a polymerization reaction by a known method. Examples of the polymerization reaction include the imidization reactions described in JP2010-254742A and JP2010-261025A and the grafting reaction described in JP2012-201831A.

Various additives may be optionally added to the methacrylic copolymer of the present invention to prepare a resin composition. The amount of additive is preferably 0.5 mass% or less, and more preferably 0.2 mass% or less, based on the resin composition. If the amount of additive is overly large, defects in appearance, such as silver streaks, may occur in the molded article.

The production method of the present invention may further comprise the step of optionally adding various additives to obtain a resin composition. The amount of the additive contained in the resin composition is preferably 0.5 mass% or less, and more preferably 0.2 mass% or less, based on the copolymer. If the amount of the additive contained in the resin composition is overly large, defects in appearance, such as silver streaks, may occur in the molded article. Additives may be added to the reactant, the reaction product, or the copolymer.

Examples of additives include antioxidants, thermal degradation inhibitors, UV absorbers, light stabilizers, lubricants, mold release agents, polymer processing aids, antistatic agents, flame retardants, pigments, light diffusers, organic dyes, delusterants, impact resistance modifiers, and phosphors.

Antioxidants themselves have an effect of preventing oxidative deterioration of resins in the presence of oxygen. Examples include phosphorus antioxidants, hindered phenolic antioxidants, and thioether antioxidants. These antioxidants can be used alone or in a combination of two or more. Among these, from the viewpoint of preventing the deterioration of optical properties due to coloration, phosphorus antioxidants and hindered phenolic antioxidants are preferable, and a combination of a phosphorus antioxidant and a hindered phenolic antioxidant is more preferable.

When a phosphorus antioxidant and a hindered phenolic antioxidant are used in combination, their ratio is not particularly limited. The mass ratio of the phosphorus antioxidant to the hindered phenolic antioxidant is preferably in the range of 1/5 to 2/1, and more preferably in the range of 1/2 to 1/1.

Examples of phosphorus antioxidants include 2,2-methylenebis(4,6-di-tert-butylphenyl)octyl phosphite (trade name: ADK STAB HP-10, produced by Adeka Corporation) and tris(2,4-di-tert-butylphenyl)phosphite (trade name: Irgafos 168, produced by BASF).

Preferable examples of hindered phenolic antioxidants include pentaerythrityl-tetrakis[3-(3,5-di-tert-butyl-4-hydroxyphenyl)propionate] (trade name: Irganox 1010, produced by BASF) and octadecyl-3-(3,5-di-tert-butyl-4-hydroxyphenyl)propionate (trade name: Irganox 1076, produced by BASF).

Thermal degradation inhibitors can prevent thermal degradation of resin by trapping polymer radicals generated upon exposure to high heat in a substantially oxygen-free state.

Preferable examples of thermal degradation inhibitors include 2-tert-butyl-6-(3'-tert-butyl-5'-methyl-hydroxybenzyl)-4-methylphenyl acrylate (trade name: Sumilizer GM, produced by Sumitomo Chemical Co., Ltd.), 2,4-di-tert-amyl-6-(3',5'-di-tert-amyl-2'-hydroxy-$\alpha$-methylbenzyl)phenyl acrylate (trade name: Sumilizer GS, produced by Sumitomo Chemical Co., Ltd.), 4-tert-butyl-2-(5-tert-butyl-2-oxo-3H-benzofuran-3-yl)phenyl-3,5-di-tert-butyl-4-hydroxybenzoate (trade name: Revonox 501, produced by Chitec Technology Co., Ltd.), 5,7-di-tert-butyl-3-(3,4-dimethylphenyl)-3H-benzofuran-2-one, and 5,7-di-tert-butyl-3-(3,4-dipropylphenyl)-3H-benzofuran-2-one (trade name: HP-136, produced by BASF).

UV absorbers are compounds having the ability to absorb ultraviolet rays. UV absorbers are compounds that are said to have the function of mainly converting light energy into heat energy.

Examples of UV absorbers include benzophenones, benzotriazoles, triazines, benzoates, salicylates, cyanoacrylates, oxalic acid anilides, malonic acid esters, and formamidines. These can be used alone or in a combination of two or more.

Among these, benzotriazoles or UV absorbers having a maximum value $\varepsilon_{max}$ of the molar absorbance coefficient at a wavelength of 380 to 450 nm of 1200 $dm^3 \cdot mol^{-1} cm^{-1}$ or less are preferable.

Benzotriazoles, which exhibit a high effect of preventing optical property deterioration such as coloration due to exposure to ultraviolet light, are preferably used as UV absorbers when the resin composition of the present invention is used for optical applications.

Light stabilizers are compounds that are said to mainly have the function of scavenging radicals generated by oxidation due to light. Preferable examples of light stabilizers include hindered amines such as compounds having a 2,2,6,6-tetraalkylpiperidine backbone.

Release agents are compounds having the function of facilitating mold release of a molded article from a mold. Examples include higher alcohols such as cetyl alcohol and stearyl alcohol, and glycerin higher fatty acid esters such as stearic acid monoglyceride and stearic acid diglyceride. In the present invention, a combination of a higher alcohol and a glycerin fatty acid monoester is preferably used as a release agent. When a higher alcohol and a glycerin fatty acid monoester are used in combination, their ratio is not particularly limited. The mass ratio of the higher alcohol to the glycerin fatty acid monoester is preferably in the range of 2.5:1 to 3.5:1, and more preferably in the range of 2.8:1 to 3.2:1.

Polymer processing aids are compounds that are effective in achieving thickness accuracy and thinness of the obtained film when the resin composition of the present invention is molded. Polymer processing aids are polymer particles with a particle size of 0.05 to 0.5 um that can usually be produced by the emulsion polymerization method.

The polymer particles may be single-layer particles comprising a polymer having a single composition ratio and a single intrinsic viscosity, or may be multilayer particles comprising two or more polymers that are different in composition ratio or intrinsic viscosity. Among these, preferable examples include particles having a two-layer structure comprising a polymer layer having a low intrinsic viscosity as an inner layer and a polymer layer having a high intrinsic viscosity of 5 dl/g or more as an outer layer.

Polymer processing aids preferably have an intrinsic viscosity of 3 to 6 dl/g. From the viewpoint of obtaining a resin composition having a high moldability-improving effect and high melt fluidity, it is preferable to use a polymer processing aid having an intrinsic viscosity in the above range.

The resin composition of the present invention may contain an impact modifier. Examples of impact modifiers include core-shell modifiers containing acrylic rubber or diene rubber as a core layer component; and modifiers containing multiple rubber particles.

Organic dyes that can be preferably used are compounds having the function of converting ultraviolet rays, which are considered to be harmful to resins, into visible rays.

Examples of light diffusers and delusterants include glass particles, polysiloxane crosslinked particles, crosslinked polymer particles, talc, calcium carbonate, and barium sulfate.

Examples of phosphors include fluorescent pigments, fluorescent dyes, fluorescent whitening dyes, fluorescent brightening agents, and fluorescent bleaching agents.

These additives may be added at the reactant stage, at the reaction product stage, or at the stage of the methacrylic copolymer or resin composition obtained after devolatilization.

The resin composition of the present invention may contain a methacrylic resin. The content of the methacrylic copolymer of the present invention in the resin composition is 20 to 100 mass%, preferably 25 to 100 mass%, and more preferably 30 to 100 mass%. Due to the content of the methacrylic copolymer of the present invention within the range of 20 to 100 mass%, the resin composition of the present invention has an excellent balance between heat resistance and low water absorption.

The methacrylic resin used in the present invention has a proportion of the structural unit derived from a methacrylic ester of 80 mass% or more, preferably 90 mass% or more, more preferably 95 mass% or more, and still more preferably 99 mass% or more. Examples of methacrylic esters include methyl methacrylate, ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, 2-ethylhexyl methacrylate, pentadecyl methacrylate, dodecyl methacrylate; phenyl methacrylate, benzyl methacrylate, phenoxyethyl methacrylate, 2-hydroxyethyl methacrylate, 2-ethoxyethyl methacrylate, glycidyl methacrylate, allyl methacrylate; cyclohexyl methacrylate, norbornenyl methacrylate, and isobornyl methacrylate, with methyl methacrylate being preferred. These methacrylic esters may be used singly, or in a combination of two or more kinds. Further, the methacrylic resin may contain a structural unit derived from a monomer other than methacrylic esters. Such another monomer is preferably an acrylic ester. The content of the structural unit derived from an acrylic ester in the methacrylic resin is preferably 20 mass% or less, more preferably 10 mass% or less, still more preferably 5 mass% or less, and most preferably 1.0 mass% or less.

Examples of such acrylic esters include methyl acrylate ("MA" below), ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. From the viewpoint of availability, MA, ethyl acrylate, n-propyl acrylate, isopropyl acrylate, n-butyl acrylate, isobutyl acrylate, and tert-butyl acrylate are preferable, MA and ethyl acrylate are more preferable, and MA is most preferable. These acrylic esters may be used singly, or in a combination of two or more kinds.

The methacrylic resin can be obtained by polymerizing the above-mentioned methacrylic ester and optional one or more other monomers. For the polymerization performed by using two or more monomers, a monomer mixture is typically prepared by mixing the two or more monomers, and the mixture is subjected to polymerization. The polymerization method is not particularly limited. From the viewpoint of productivity, radical polymerization is preferably performed according to a method such as bulk polymerization, suspension polymerization, solution polymerization, or emulsion polymerization.

The methacrylic resin preferably has a weight average molecular weight ("Mw" below) of 40,000 to 400,000, more preferably 45,000 to 200,000, and still more preferably 50,000 to 150,000. Due to the methacrylic resin having a weight average molecular weight of 40,000 or more, the resin composition of the present invention becomes excellent in mechanical strength; due to the methacrylic resin having a weight average molecular weight of 400,000 or less, the resin composition becomes excellent in fluidity with enhanced moldability.

When being formed into a molded article with a thickness of 3 mm, the resin composition of the present invention has a total light transmittance of preferably 90.0% or more, more preferably 90.5% or more, and still more preferably 91.0% or more as measured according to the method specified in JIS K 7361-1. A molded article with a total light transmittance of 90.0% or more has excellent transparency.

When being formed into a molded article, the resin composition of the present invention has a haze of preferably 3.0% or less, more preferably 2.5% or less, and still more preferably 2.0% or less as measured according to the method specified in JIS K 7136. A molded article with a haze of 3.0% or less has excellent transparency. In the present invention, "the resin composition in the form of a molded article having a haze of X% or less as measured according to the method specified in JIS K 7136" means a resin composition having a haze of X% or less when the resin composition is in the form of a square test specimen with a thickness of 3 mm and a side of 50 mm produced in the same manner as in the Examples of the present specification and is measured according to the method specified in JIS K 7136.

Various molded articles can be obtained by molding (melt heating molding) the methacrylic copolymer of the present invention, a resin composition thereof, a copolymer obtained by the production method of the present invention, or a resin composition thereof according to a known molding method such as injection molding, compression molding, extrusion molding, or vacuum molding. Examples of molded articles of the present invention include signboard parts, display parts, lighting parts, interior parts, construction parts, parts related to transport machinery, electronic equipment parts, medical equipment parts, parts related to machinery, optical parts such as liquid crystal protection boards, light guide panels, light guide films, Fresnel lenses, lenticular lenses, front boards of various displays, and diffuser panels, parts related to traffic, film materials such as polarizer protection films, polarizing-plate protection films, phase difference films, surface materials for automotive interiors, surface materials for mobile phones, and marking films, and home appliance parts.

Examples

The present invention will be described in more detail with reference to the following Examples. However, the present invention is not limited to the Examples. The present invention includes all embodiments formed by any combination of the above-described matters representing technical features such as characteristic values, forms, production methods, and uses.

Physical properties were measured according to the following methods.

Polymerization Conversion Rate

A column, InertCap 1 (df = 0.4 um, 0.25 mmI.D. × 60 m) produced by GL Sciences Inc., was connected to a GC-14A gas chromatograph produced by Shimadzu Corporation to perform analysis under the following conditions, and calculation was performed based on the analysis.

Injection temperature = 250°C
Detector temperature = 250°C
Temperature conditions: the temperature is kept at 60°C for 5 minutes → raised at 10°C/min to 250°C → kept at 250°C for 10 minutes

Weight Average Molecular Weight Mw, Molecular Weight Distribution Mw/Mn

The value corresponding to the molecular weight of standard polymethyl methacrylate determined from the chromatogram measured by GPC (gel permeation chromatography) was taken as the molecular weight of a copolymer.
Apparatus: HLC-8320 GPC apparatus produced by Tosoh Corporation Separation column: serially connected TSK guard column Super HZ-H, TSKgel HZM-M, and TSKgel Super HZ4000 produced by Tosoh Corporation
Eluent: tetrahydrofuran
Eluent flow rate: 0.35 mL/min
Column temperature: 40°C
Detection method: differential refractive index (RI), absorbance detector (UV)

Each Unit Composition in Copolymer

For the $\alpha$-methylstyrene-methyl methacrylate copolymer, the proton ratio of the phenyl group of the $\alpha$-methyl-styrene unit to the methoxy group of the methyl methacrylate unit was determined by $^{1}$H-NMR, and the $\alpha$-methylstyrene unit $\alpha$Mst and the methyl methacrylate unit MMA were calculated from the proton ratio.
For the $\alpha$-methylstyrene-methyl methacrylate-styrene copolymer, the carbon ratio of the phenyl group of the $\alpha$-methylstyrene unit, the carbonyl group of the methyl methacrylate unit, and the phenyl group of the styrene unit was determined by $^{13}$C-NMR, and the $\alpha$-methylstyrene unit $\alpha$Mst, the methyl methacrylate unit MMA, and the styrene unit St were calculated from the carbon ratio.

Glass Transition Temperature Tg

A DSC curve was measured with a differential scanning calorimeter (DSC-50, model number, produced by Shimadzu Corporation) in accordance with JIS K 7121 under conditions in which the methacrylic copolymer was heated to 250°C and then cooled to room temperature, and then heated from room temperature to 200°C at 10°C/min. The glass transition temperature at the midpoint determined from the DSC curve, measured at the time of the second temperature rise, was defined as the glass transition temperature in the present invention.

1% Thermogravimetric Loss Temperature

The methacrylic copolymer was heated at 10°C/min to 500°C in a nitrogen atmosphere with a thermogravimetric analyzer (TGA-50, produced by Shimadzu Corporation), and the temperature at which 1% thermogravimetric weight was lost was defined as the 1% thermogravimetric loss temperature.

Thermogravimetric Retention Rate

When a sample having an initial weight of W0 is heated to 270°C at 20°C/min in a nitrogen atmosphere with a thermogravimetric analyzer (TGA-50, produced by Shimadzu Corporation), kept for 30 minutes after reaching 270°C, and then reaches W1, the thermogravimetric retention rate (%) can be calculated from $(W1/W0) \times 100$.

Saturated Water Absorption Rate at 23°C

The resin obtained in each of the Examples and Comparative Examples was placed in a rectangular mold with short sides of 110 mm and long sides of 150 mm, and pressed at 230°C at 50 kg/cm$^2$ for 5 minutes, thereby preparing a sheet having a thickness of 2 mm, short sides of 110 mm, and long sides of 150 mm. A test specimen prepared by cutting the obtained sheet into a square piece with sides of 50 mm was dried under reduced pressure (1 kPa) at 80°C for 24 hours and then allowed to cool in a desiccator at a temperature of 23°C and a relative humidity of 50%, followed by immediately measuring the mass of the test specimen, which was determined to be the initial mass. Subsequently, the test specimen was immersed in distilled water at 23°C, and the mass was measured over time. The saturated water absorption rate was calculated according to the following equation using the mass at the point in time when no change in mass was observed (mass after water absorption).

$$\text{Saturated water absorption rate (23°C) (\%) = [(mass after water absorption - initial mass)/initial mass]} \times 100$$

Melt Flow Rate: MFR

The resins obtained in the Production Examples, Examples, and Comparative Examples were measured at 230°C under a load of 3.8 kg in accordance with JIS K 7210.

Transparency

The resins obtained in the Production Examples, Examples, and Comparative Examples were each mixed with a methacrylic resin (trade name: Parapet HRS, produced by Kuraray Co., Ltd.) at a ratio of 50 parts by mass each, melt-kneaded at 230°C with a twin-screw extruder having a shaft diameter of 20 mm, and extruded, thereby obtaining resin compositions.
The obtained resin compositions were injection-molded with an injection molder (M-100C produced by Meiki Co., Ltd.) at a cylinder temperature of 250°C, a mold temperature of 50°C, and an injection speed of 50 mm/sec, thereby obtaining square injection-molded specimens having a thickness of 3 mm and a side of 50 mm. The obtained injection-molded specimens were measured for haze according to the method specified in JIS K 7136. The following evaluation was performed based on the obtained haze values.
Excellent: the haze is 3.0% or less.
Good: the haze is 3.0% or more and less than 5.0%.
Fair: the haze is 5.0% or more and less than 10.0%.
Poor: the haze is 10.0% or more.

The effects brought about by the methacrylic copolymer of the present invention will be described by a comparison in the following examples.

Example 1

In an autoclave equipped with a stirrer and a collecting tube, 73.31 parts by mass of purified methyl methacrylate, 12.50 parts by mass of $\alpha$-methylstyrene, 14.19 parts by mass of styrene, and n-octyl mercaptan were mixed to give an n-octyl mercaptan concentration of 500 ppm. The mixture was then mixed with 2,2'-azobis(2-methylpropionitrile) to result in a concentration of 400 ppm and with n-octyl mercaptan (n-OM) to result in a concentration of 500 ppm, thereby obtaining a reactant. Nitrogen gas was blown into the reactant to remove dissolved oxygen up to 3 ppm.
A continuous-flow tank reactor equipped with a brine-cooling condenser was purged with nitrogen gas. The reactant was continuously supplied to the tank reactor at a constant flow rate such that the average residence time $\theta$ was 150 minutes, and bulk polymerization was performed at a temperature of 130°C, while the reaction product was continuously extracted from the tank reactor at the same time. The pressure in the tank reactor was controlled by a pressure regulation valve connected to the brine-cooling condenser. The average concentration I of the radical polymerization initiator in the liquid in the tank reactor was $6.76 \times 10^{-6}$ mol/L. I $\times \theta$ is $1.57 \times 10^{-5}$ mol·hr/L. The polymerization conversion rate was 37%, and the obtained methacrylic copolymer had a weight average molecular weight (Mw) of 136000, a molecular weight distribution (Mw/Mn) of 2.00, and an (A-B)/A ratio of $5.7 \times 10^{-6}$. The obtained methacrylate copolymer pellets were pressed and measured for saturated water absorption rate, which was 0.87%.
The obtained methacrylic copolymer was purified to remove unreacted monomers and analyzed. The obtained methacrylic copolymer had a mass fraction of the methyl methacrylate unit (MMA) of 67.5 mass%, a mass fraction of the $\alpha$-methylstyrene unit ($\alpha$Mst) of 15.1 mass%, a mass fraction of the styrene unit (St) of 17.4 mass%, a glass transition temperature of 123°C, a 1% thermogravimetric loss temperature of 276°C, a thermogravimetric retention rate of 91%, and a melt flow rate of 0.80 g/10 min.

Example 2

A methacrylic copolymer was obtained and analyzed in the same manner as in Example 1, except that 59.13 parts by mass of methyl methacrylate, 12.50 parts by mass of $\alpha$-methylstyrene, and 28.37 parts by mass of styrene were used for the monomer mixture placed into the autoclave.

Example 3

A methacrylic copolymer was obtained and analyzed in the same manner as in Example 1, except that 59.97 parts by mass of methyl methacrylate, 18.75 parts by mass of $\alpha$-methylstyrene, and 21.28 parts by mass of styrene were used for the monomer mixture placed into the autoclave, and that the polymerization temperature was 140°C.

Example 4

A methacrylic copolymer was obtained and analyzed in the same manner as in Example 3, except that 77.50 parts by mass of methyl methacrylate, 17.50 parts by mass of $\alpha$-methylstyrene, and 5.00 parts by mass of styrene were used for the monomer mixture placed into the autoclave.

Example 5

A methacrylic copolymer was obtained and analyzed in the same manner as in Example 3, except that 65.00 parts by mass of methyl methacrylate, 28.00 parts by mass of $\alpha$-methylstyrene, and 7.00 parts by mass of styrene were used for the monomer mixture placed into the autoclave.

Comparative Example 1

A methacrylic copolymer was obtained and analyzed in the same manner as in Example 1, except that 75.00 parts by mass of methyl methacrylate and 25.00 parts by mass of $\alpha$-methylstyrene were used for the monomer mixture placed into the autoclave, the concentration of n-octyl mercaptan was 400 ppm, the concentration of 2,2'-azobis(2-methylpropionitrile) was 600 ppm, the concentration of n-octyl mercaptan (n-OM) was 400 ppm, and the average residence time $\theta$ was 200 minutes.

Comparative Example 2

A methacrylic copolymer was obtained and analyzed in the same manner as in Example 1, except that 91.50 parts by mass of methyl methacrylate and 8.50 parts by mass of styrene were used for the monomer mixture placed into the autoclave, 11.1 parts by mass of toluene per 100 parts by mass of the monomer mixture was also added, the concentration of n-octyl mercaptan was 2500 ppm, the concentration of 2,2'-azobis(2-methylpropionitrile) was 222 ppm, the polymerization temperature was 110°C, and the average residence time $\theta$ was 120 minutes.

Comparative Example 3

A methacrylic copolymer was obtained and analyzed in the same manner as in Example 1, except that 59.00 parts by mass of methyl methacrylate, 40.00 parts by mass of $\alpha$-methylstyrene, and 1.00 parts by mass of styrene were used for the monomer mixture placed into the autoclave, and the concentration of 2,2'-azobis(2-methylpropionitrile) was 1000 ppm.

Comparative Example 4

A methacrylic copolymer was obtained and analyzed in the same manner as in Example 1, except that 5.00 parts by mass of methyl methacrylate, 60.00 parts by mass of $\alpha$-methylstyrene, and 35.00 parts by mass of styrene were used for the monomer mixture placed into the autoclave, and the concentration of 2,2'-azobis(2-methylpropionitrile) was 1000 ppm.

Comparative Example 5

The polymerization was performed in the same manner as in Example 4, except that the polymerization temperature was 90°C. However, this method resulted in a polymerization rate as low as 15% and failed to yield a methacrylic copolymer.

Comparative Example 6

The polymerization was performed in the same manner as in Example 1, except that the concentration of 2,2'-azobis(2-methylpropionitrile) was 20 ppm. However, this method resulted in a polymerization rate as low as 25% and failed to yield a methacrylic copolymer.

Table 1

| | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Starting Material Composition | MMA | wt% | 73.31 | 59.13 | 59.97 | 77.50 | 65.00 | 75.00 | 91.50 | 59.00 | 500 | 77.50 | 77.50 |
| | αMSt | wt% | 12.50 | 12.50 | 18.75 | 17.50 | 28.00 | 25.00 | 0.00 | 40.00 | 60.00 | 17.50 | 17.50 |
| | St | wt% | 14.19 | 28.37 | 21.28 | 500 | 7.00 | | 8.50 | 1.00 | 35.00 | 500 | 500 |
| | Toluene | phr | | | | | | | 11.1 | | | | |
| Initiator | AIBN | ppm | 400 | 400 | 400 | 400 | 500 | 600 | 222 | 1000 | 1000 | 400 | 20 |
| Chain Transfer Agent | nOM | ppm | 500 | 500 | 500 | 500 | 200 | 400 | 2500 | 500 | 500 | 500 | 500 |
| Polymerization Conditions | Polymerization Temperature | °C | 130 | 130 | 140 | 140 | 140 | 130 | 110 | 130 | 130 | 90 | 140 |
| | Average Residence Time $\theta$ | h | 2.5 | 2.5 | 2.5 | 2.5 | 2.5 | 3.3 | 2 | 2.5 | 2.5 | 2.5 | 2.5 |
| | Uncleaved initiator Concentration I | $10^{-5}$ mol/L | 0.63 | 0.62 | 0.24 | 0.24 | 0.3 | 0.71 | 11.5 | 1.6 | 1.5 | 40 | 0.012 |
| | $I \times \theta$ | $10^{-5}$ h.mol/L | 1.6 | 1.6 | 0.60 | 0.60 | 0.75 | 2.3 | 23 | 4.1 | 3.8 | 100 | 0.030 |
| Polymerization Rate | | wt% | 37 | 36 | 39 | 40 | 35 | 37 | 55 | 35 | 31 | 15 | 25 |
| Polymer Composition | MMA | wt% | 67.5 | 57.0 | 62.0 | 84.0 | 76.0 | 88.0 | 89.0 | 700 | 10.0 | 63.0 | 84.0 |
| | aMSt | wt% | 15.1 | 19.9 | 20.0 | 10.0 | 16.1 | 120 | 0.0 | 150 | 450 | 35.0 | 10.0 |
| | St | wt% | 17.4 | 23.2 | 18.0 | 60 | 7.9 | 0.0 | 11.0 | 5.0 | 45.0 | 2.0 | 60 |
| Incorporation Rate of aMSt (Incorporation Amount/Charged Amount) | | % | 121 | 159 | 107 | 57 | 58 | 48 | | 38 | 75 | 200 | 57 |
| Molecular Weight (PMMA-equivalent Amount) | Mw | - | 136000 | 139000 | 135000 | 130000 | 101450 | 108000 | 80940 | 75000 | 66000 | 89000 | 195000 |
| | Mw/Mn | - | 1.997 | 1.998 | 1.997 | 1.997 | 1.81 | 2.00 | 1.92 | 2.00 | 200 | 200 | 2.00 |

EP 4 310 113 A1

(continued)

| | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| (\|A-B\|)/B * Determined from GPC | - | 0.00001 | 0.00002 | 0.00010 | 0.0088 | 0.02030 | 0.011 | 0004 | 0.0001 | 0.070 | 0.0088 | 0.0088 |
| Evaluation of Physical Properties | Tg | °C | 123 | 119 | 123 | 128 | 128 | 131 | 118 | 115 | 100 | | |
| | 1% Thermogravimetric Loss Temperature | °C | 276 | 289 | 284 | 282 | 271 | 242 | 314 | 230 | 220 | | |
| | Thermogravimetric Retention Rate (270°C) | % | 91 | 95 | 92 | 90 | 77.6 | 860 | 92 | 80.0 | 800 | | |
| | Saturated Water Absorption Rate (23°C) | % | 0.87 | 0.50 | 0.75 | 1.53 | 1.54 | 1.80 | 1.78 | 1.45 | 0.35 | | |
| | MFR | g/10 min | 0.80 | 1.3 | 3.4 | 5.0 | 9.5 | 1.4 | 7.2 | 1.5 | 5.2 | | |
| | Transparency | - | Fair | Fair | Good | Excellent | Excellent | Excellent | Poor | Excellent | Poor | | |

16

EP 4 310 113 A1

Example 4 achieved an equivalent or higher polymerization rate than Comparative Example 1 with an average residence time shorter than that in Comparative Example 1, and the obtained methacrylic copolymer had a higher 1% thermogravimetric loss temperature. Further, the obtained methacrylic copolymer also had a higher glass transition temperature and a lower water absorption rate than those of the methacrylic copolymer obtained in Comparative Example 2.

Examples 1 to 5 achieved an equivalent polymerization rate compared with Comparative Example 3 or 4, by using 2,2'-azobis(2-methylpropionitrile) at a lower concentration than that in Comparative Example 3 or 4, and had a higher 1% thermogravimetric loss temperature because of the decrease in the initiator terminals, which are poor in thermal decomposition resistance.

Comparative Example 5 showed an overly low polymerization temperature. Comparative Example 6 was unable to achieve an appropriate polymerization rate due to the overly small amount of 2,2'-azobis(2-methylpropionitrile).

**Claims**

1. A methacrylic copolymer comprising 40 to 87 mass% of a methyl methacrylate unit, 8 to 30 mass% of an $\alpha$-methylstyrene unit, and 5 to 30 mass% of a styrene unit, wherein

   when heated at a temperature increase rate of 10°C/min in a nitrogen atmosphere, the methacrylic copolymer has a 1% thermogravimetric loss temperature of higher than 260°C, and
   the methacrylic copolymer satisfies a relationship represented by formula (1):

   $$(|A-B|)/B < 0.05 \qquad (1)$$

   wherein A is a logarithm of peak top molecular weight in a differential molecular mass distribution curve obtained by gel permeation chromatography measurement using a refractive index detector, and B is a logarithm of peak top molecular weight in a differential molecular weight distribution curve obtained by gel permeation chromatography measurement using an absorbance detector at a detection wavelength of 254 nm.

2. The methacrylic copolymer according to claim 1 having a glass transition temperature of 115°C or higher.

3. The methacrylic copolymer according to claim 1 having a glass transition temperature of 120°C or higher.

4. The methacrylic copolymer according to claim 1 having a saturated water absorption rate of less than 1.7%.

5. A resin composition comprising the methacrylic copolymer of claim 1.

6. A resin composition comprising a methacrylic resin and the methacrylic copolymer of claim 1, the methacrylic resin comprising 90 mass% or more of a methyl methacrylate unit.

7. The resin composition according to claim 6, which has a haze of 3.0% or less as measured by a method specified in JIS K 7136.

8. A resin composition comprising an antioxidant and the methacrylic copolymer of claim 1.

9. A molded article comprising the methacrylic copolymer of claim 1 or the resin composition of claim 5 or 6.

10. A film comprising the methacrylic copolymer of claim 1 or the resin composition of claim 5.

11. A laminate comprising a layer comprising the methacrylic copolymer of claim 1 and a layer comprising another thermoplastic resin.

12. A method for producing the methacrylic copolymer of claim 1, comprising

    continuously supplying a reactant to a tank reactor, the reactant comprising a monomer mixture and a radical polymerization initiator, the monomer mixture containing 40 to 87 mass% of methyl methacrylate, 10 to 30 mass% of $\alpha$-methylstyrene, and 3 to 30 mass% of styrene;

subjecting the monomer mixture to bulk polymerization in the tank reactor until a polymerization conversion rate of 30 to 60 mass% is achieved to obtain a reaction product;
continuously extracting the reaction product from the tank reactor; and
removing the monomer mixture remaining in the extracted reaction product from the reaction product,
wherein the incorporation rate of an $\alpha$-methylstyrene unit into the methacrylic copolymer is more than 50% relative to the weight fraction of the $\alpha$-methylstyrene in the reactant monomer.

13. A method for producing the methacrylic copolymer of claim 1 comprising

continuously supplying a reactant to a tank reactor, the reactant comprising a monomer mixture and a radical polymerization initiator, the monomer mixture containing 40 to 87 mass% of methyl methacrylate, 10 to 30 mass% of $\alpha$-methylstyrene, and 3 to 30 mass% of styrene;
subjecting the monomer mixture to bulk polymerization in the tank reactor until a polymerization conversion rate of 30 to 60 mass% is achieved to obtain a reaction product;
continuously extracting the reaction product from the tank reactor; and
removing the monomer mixture remaining in the extracted reaction product from the reaction product,
wherein when the radical polymerization initiator present in liquid in the tank reactor has an average concentration of I mol/L and the average residence time of the reactant in the tank reactor is $\theta$ hours, the product of the average concentration and the average residence time, I $\times$ $\theta$, is more than $1 \times 10^{-6}$ mol·hr/L and less than $2 \times 10^{-5}$ mol·hr/L.

14. A method for producing the methacrylic copolymer of claim 1, comprising continuously supplying a reactant to a tank reactor, the reactant comprising a monomer mixture and a radical polymerization initiator, the monomer mixture containing 40 to 87 mass% of methyl methacrylate, 10 to 30 mass% of $\alpha$-methylstyrene, and 3 to 30 mass% of styrene, per 100 parts by mass of the monomer mixture;

subjecting the monomer mixture to a polymerization reaction in the tank reactor to obtain a reaction product;
continuously extracting the reaction product from the tank reactor; and
removing the monomer mixture remaining in the extracted reaction product from the reaction product,
wherein when the radical polymerization initiator present in liquid in the tank reactor has an average concentration of I mol/L and the average residence time of the reactant in the liquid in the tank reactor is $\theta$ hours and when the product of the average concentration and the average residence time, I $\times$ $\theta$, is more than $1.0 \times 10^{-6}$ mol·hr/L and less than $2.0 \times 10^{-5}$ mol·hr/L, a polymerization conversion rate of 30 to 60 mass% is achieved.

15. The production method according to claim 12, wherein the temperature in the tank reactor is 120°C or higher and 150°C or lower, and the average residence time $\theta$ of the reactant in the tank reactor is 1.5 to 5 hours.

## INTERNATIONAL SEARCH REPORT

International application No.

**PCT/JP2022/012888**

### A. CLASSIFICATION OF SUBJECT MATTER

*C08F 212/06*(2006.01)i; *C08F 212/08*(2006.01)i; *C08F 220/14*(2006.01)i
FI:    C08F220/14; C08F212/06; C08F212/08

According to International Patent Classification (IPC) or to both national classification and IPC

### B. FIELDS SEARCHED

Minimum documentation searched (classification system followed by classification symbols)

C08F212/06; C08F212/08; C08F220/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY

### C. DOCUMENTS CONSIDERED TO BE RELEVANT

| Category* | Citation of document, with indication, where appropriate, of the relevant passages | Relevant to claim No. |
|---|---|---|
| X | JP 8-192459 A (NIPPON STEEL CORP.) 30 July 1996 (1996-07-30)<br>claim 1, paragraphs [0009]-[0019], [0022]-[0028] | 1-11 |
| X | KR 10-1842858 B1 (LG MMA CORP.) 14 May 2018 (2018-05-14)<br>claims 1, 3, 4, paragraphs [0056]-[0060], [0062]-[0066], [0076]-[0078], [0080]-[0129] | 1, 4, 5, 8-10, 12-15 |
| A | JP 2004-210907 A (KURARAY CO., LTD.) 29 July 2004 (2004-07-29)<br>entire text | 1-15 |
| A | JP 2005-247949 A (KURARAY CO., LTD.) 15 September 2005 (2005-09-15)<br>entire text | 1-15 |
| A | JP 5-059321 A (NIPPON STEEL CHEM. CO., LTD.) 09 March 1993 (1993-03-09)<br>entire text | 1-15 |

☐ Further documents are listed in the continuation of Box C.      ☑ See patent family annex.

| | |
|---|---|
| \*    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **18 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/012888**

| Patent document cited in search report | | | Publication date (day/month/year) | Patent family member(s) | Publication date (day/month/year) |
|---|---|---|---|---|---|
| JP | 8-192459 | A | 30 July 1996 | (Family: none) | |
| KR | 10-1842858 | B1 | 14 May 2018 | (Family: none) | |
| JP | 2004-210907 | A | 29 July 2004 | (Family: none) | |
| JP | 2005-247949 | A | 15 September 2005 | (Family: none) | |
| JP | 5-059321 | A | 09 March 1993 | (Family: none) | |

Form PCT/ISA/210 (patent family annex) (January 2015)

**EP 4 310 113 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021045598 A
- WO 2005070978 A
- JP H0559321 A
- JP H04300907 A
- JP H04218515 A
- JP H04328111 A
- JP 2010254742 A
- JP 2010261025 A
- JP 2012201831 A